# EUROPÄISCHE PATENTSCHRIFT

(11) **EP 1 081 362 B1**
(45) Veröffentlichungstag und Bekanntmachung des Hinweises auf die Patenterteilung: **04.10.2006**
(21) Anmeldenummer: 00118430.8
(22) Anmeldetag: 24.08.2000
(51) Int. Cl.: F02D 41/22

(54) **Verfahren zum gesteuerten Betrieb einer Brennkraftmaschine nach Fehlerdiagnose**
Method to control an internal combustion engine after a fault diagnosis
Méthode de contrôle d'un moteur à explosion après diagnostic d'erreurs

(30) Priorität: 31.08.1999 DE 19941440
(43) Veröffentlichungstag der Anmeldung: 07.03.2001
(73) Patentinhaber: SIEMENS AKTIENGESELLSCHAFT, 80333 München (DE)
(72) Erfinder: Przymusinski, Achim, 93049 Regensburg (DE); Fiedler, Stephan, 93059 Regensburg (DE); Böhnig, Ralf, 93049 Regensburg (DE)

(56) Entgegenhaltungen:
- EP-A- 0 420 166
- WO-A-97/13064
- DE-A- 4 326 498
- DE-A- 19 731 116
- DE-C- 19 723 079
- K. MISCHKER ET. AL.: "A New Object-Oriented Diagnostic System Management for Powertrain Control Units with OBD" SAE TECHNICAL PAPER 980512, 23. Februar 1998 (1998-02-23), XP002230964 ISSN: 0148-7191

## Beschreibung

Die vorliegende Erfindung betrifft ein Verfahren zum gesteuerten Betrieb einer Vorrichtung, insbesondere einer Brennkraftmaschine.

Die DE 197 23 079 C1 beschreibt ein Fehlerdiagnoseverfahren zur Überwachung und Fehlererkennung von technischen Funktionen eines Kraftfahrzeuges. Dabei werden mehrere technische Funktionen dahingehend überwacht, ob sie einen Fehler aufweisen oder nicht. Direkte gegenseitige Abhängigkeiten und Beeinflussungen der zu überwachenden Funktionen werden in Form einer Matrixdarstellung in logischer Ja/Nein-Form gefaßt, um aus der Überwachung technischer Funktionen auf wirkliche Fehler schließen zu können und dabei Sekundärbeeinflussungen auszuschließen. Damit ist es möglich, Fehlermeldungen auf ihre Aussagekraft hin zu untersuchen und die Sicherheit einer Aussage über eine tatsächliche Fehlerursache zu verbessern.

Aus der DE 197 31 116 A1 ist ein Betriebsverfahren für ein Steuergerät und ein Steuergerät zur Diagnose einer Brennkraftmaschine bekannt, bei der bestimmte Diagnosefunktionen mittels einer Ablaufsteuerung so aktiviert werden, daß gegenseitige Abhängigkeiten zwischen den Diagnosefunktionen nicht zu falschen Fehlermeldungen führen. Diese Abhängigkeiten werden dabei in Form von Tabellen oder Matrizen abgelegt.

Aus der WO 97/13064 und der Veröffentlichung Mischker K., Hillner H. und Schiemann J. "A New Object-Oriented Diagnostic System Management for Powertrain Control Units with OBD", SAE Technical Paper 980512, Febr. 1998, ISSN 0148-7191 ist es ebenfalls bekannt, zur Überwachung einer Brennkraftmaschine unterschiedliche Diagnosefunktionen auf gegenseitige Beeinflussungen oder Abhängigkeiten zu prüfen und mittels einer Ablaufsteuerung nach Prioritäten geordnet zu aktivieren.

Die **EP-A-0 420 166** offenbart die Festlegung und Einstellung einer bestimmten Betriebsanforderung an ein und in einem z.B. pneumatischen Steuersystem; dabei ist es selbstverständlich, daß diese Betriebsanforderung auch eine Notlaufanforderung sein kann , die durch ein Diagnose Anhand von Sensordaten hervorgerufen worden ist.

Diese Betriebsanforderung kann durch die Konfigurationen 0-n gesteuert eingestellt werden, wobei jede dieser Konfigurationen mit den Betriebs- oder Steuerungseinschränkungsanforderungen auf Querbeeinflussungen hin gefiltert werden) und die so weitergeleiteten Anforderungen werden nach der höchsten gefundenen Bewertung durchgeführt.

Obwohl das Verfahren zum gesteuerten Betrieb einer Vorrichtung auf beliebige technische Vorrichtungen oder Systeme anwendbar ist, werden die vorliegende Erfindung sowie die ihr zugrunde liegende Problematik in Bezug auf eine Brennkraftmaschine eines Kraftfahrzeuges näher erläutert.

Mit der steigenden Komplexität technischer Funktionen, welche an Bord eines Kraftfahrzeuges ablaufen, steigt die Schwierigkeit, auftretende Fehler beim Betrieb einer Brennkraftmaschine zu lokalisieren, betreffenden Komponenten zuzuordnen und entsprechende Maßnahmen zu ergreifen, so daß zumindest noch ein Notlaufbetrieb sichergestellt ist. Im Rahmen der sogenannten On-board-Diagnose in Kraftfahrzeugen sollen möglichst viele technische Funktionen überwacht, Fehler erkannt und defekten Komponenten möglichst genau zugeordnet werden, und eine entsprechende Reaktion des Systems veranlaßt werden, um mit möglichst uneingeschränktem Betrieb des Kraftfahrzeuges bzw. der Brennkraftmaschine, einen Notlaufbetrieb aufrechterhalten zu können.

Was die Fehlerdiagnose selbst angeht, steht man in der Praxis vor dem grundsätzlichen Problem, daß nur wenige technische Funktionen durch direkt messende Sensoren überprüfbar sind, weshalb die Diagnose der meisten Funktionen indirekt über sogenannte Symptomüberwachungen erfolgen muß.

Bei einer solchen Überwachung besteht jedoch eine gegenseitige Abhängigkeit bzw. Beeinflussung der einzelnen Diagnosefunktionen. Man kann deshalb aus einem einzigen Fehlersymptom nicht auf eine einzige Fehlerursache schließen. Es besteht die Gefahr, daß man neben dem wahren Fehler einen sogenannten Folgefehler detektiert.

Querbeeinflussungsprüfung ist deshalb ein Bündel an Betriebs- oder Steuerungsmaßnahmen, alleine oder in bestimmten Kombinationen zugelassen, wobei vorzugsweise unterschiedliche Kombinationen bzw. einzelne Maßnahmen jeweils nach der Härte ihres Eingriffs in den Betrieb der Vorrichtung bewertet sind.

In der Ablaufplanung werden dann die möglichen Maßnahmen durchgespielt mit dem Ziel, diejenigen Betriebs- oder Steuerungsmaßnahmen zu finden, die den geringsten Eingriff in die Leistungsfähigkeit der Vorrichtung, insbesondere einer Brennkraftmaschine, bedeuten und dennoch die Betriebs- oder Steuerungseinschränkungsanforderungen, die sich aus dem diagnostizierten Fehler ergaben, erfüllen.

die Betriebs- oder Steuerungseinschränkungsanforderungen werden in einer Matrix ausgedrückt, die mit einer Matrix, die die Querbeeinflussungen wiedergibt, multipliziert wird. Dabei kann die Matrix der Querbeeinflussung zugleich die Bewertung der Betriebs- oder Steuerungseinschränkungsanforderungen vornehmen, wenn in den Matrixzellen geeignete Zahlenwerte vorgesehen sind.

In einer anderen Ausführungsform werden die Betriebs- oder Steuerungseinschränkungsanforderungen durch einen Multiplexer geleitet, der bei gleichzeitiger Anforderung mehrerer Betriebs- oder Steuerungseinschränkungsanforderungen nur eine davon weiterleitet. Zur Bewertung ist es dann möglich, mehrere Multiplexer parallel vorzusehen, wobei jeder Multiplexer einer Prioritätsklasse zugeordnet ist, so daß eine Bewertung erreicht wird.

Das erfindungsgemäße Verfahren, wie es in Anspruch 1 definiert ist eignet sich besonders dazu, in einem Programmodul einer programmgesteuerten Steuerungseinrichtung zusammengefaßt zu werden. Das Verfahren ermöglicht eine gezielte Koordination einzelner Maßnahmen zur Erreichung einer optimalen Wirkung, bzw. zum Erreichen minimaler Leistungseinschränkung einer Vorrichtung.

Vorteilhafte Ausgestaltungen der Erfindung sind in den Unteransprüchen gekennzeichnet.

Die Erfindung wird nachfolgend unter Bezugnahme auf die Zeichnung in einem Ausführungsbeispiel näher erläutert. In der Zeichnung zeigt:
Fig. 1 ein Blockschaltbild zur Durchführung des Verfahrens zum gesteuerten Betrieb einer Vorrichtung,
Fig. 2 eine detailliertere Darstellung des Blockschaltbildes der Fig. 1, und
Fig. 3 eine Darstellung zu einer Ausführungsform der Querbeeinflussungsprüfung.

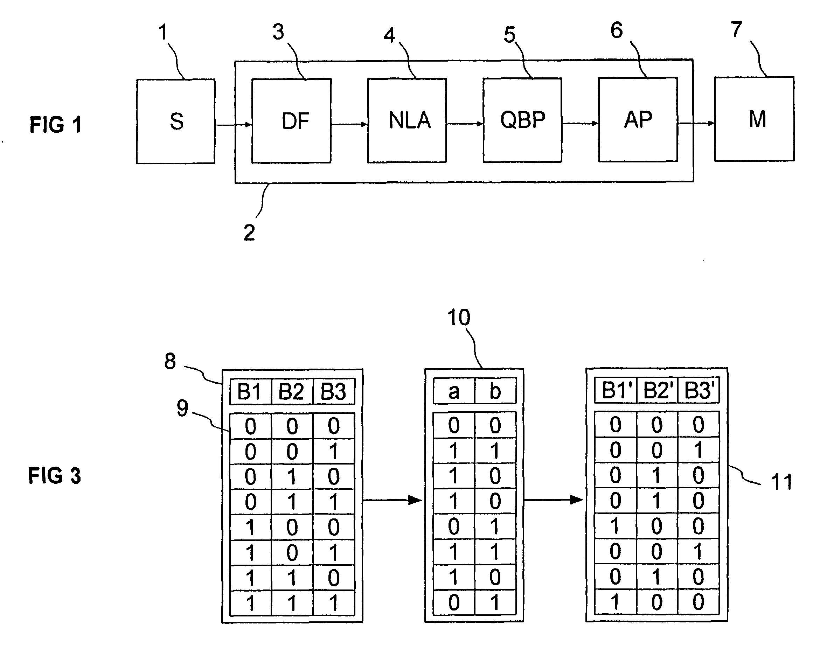

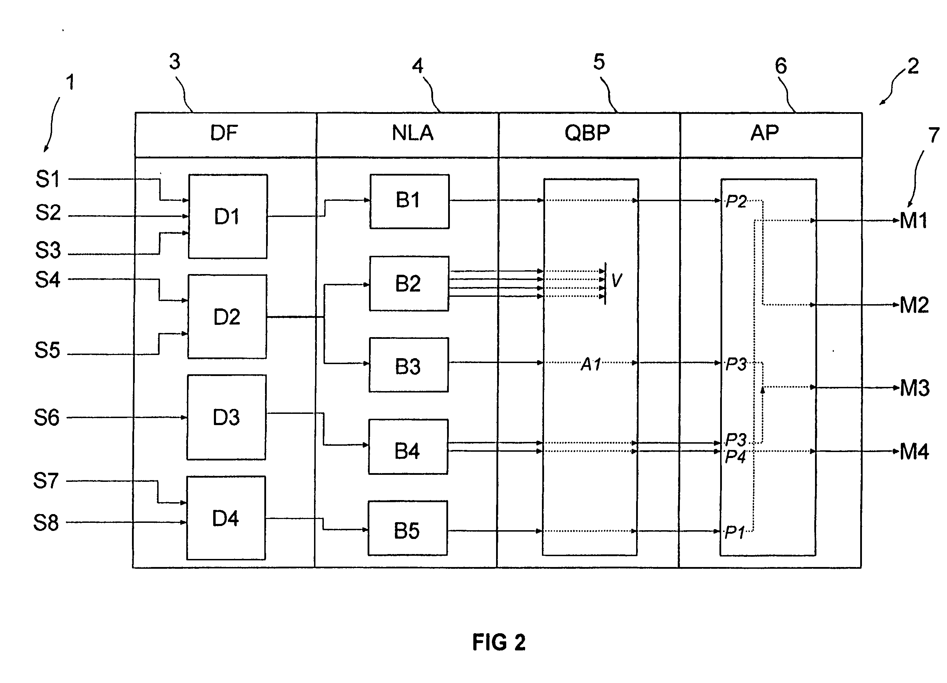

In Fig. 1 ist ein Blockschaltbild eines Verfahrens zum Betrieb einer Brennkraftmaschine dargestellt. Dieses Verfahren wird von einem Steuergerät einer Brennkraftmaschine durchgeführt, dem die Signale verschiedener Sensoren zugeführt werden. Dazu werden verschiedene Signale S in einem Block 1 einem Modul 2 zugeführt, das ein Programmmodul in der Steuereinrichtung ist. Die Signale S werden dabei in einen Block 3 eingespeist. Beim Block 3 handelt es sich um eine Diagnosefunktion DF, die anhand der Signale S Fehler erkennt. Jede Diagnose D1 bis D4 der Diagnosefunktion DF kann verschiedene Signale S1 bis S8 auswerten. So wertet die Diagnose D1 im Beispiel der Fig.2 die Signale S1 bis S3 aus, die Diagnose D2 die Signale S4 und S5, die Diagnose D3 die Signale S6 und die Diagnose D4 die Signale S7 und S8. Natürlich ist es auch möglich, daß ein Signal an mehrere Diagnosen geleitet wird, dies ist zur Vereinfachung in der Fig. 2 jedoch nicht dargestellt.

Bei den Signalen S kann es sich beispielsweise um einen Drehzahlgradienten, um einen Einspritzspeicherleitungsdruckgradienten, um die Spannungsüberwachung einer Endstufe, um den Zeitverlauf einer Kraftstoffeinspritzung, usw. handeln. Aus diesen Fehlersignalen kann die Diagnosefunktion DF auf verschiedenste Weise auf Fehlfunktionen schließen. Im folgenden seien zwei Beispiele genannt:
1. Beim aus der DE 197 23 079 C1 bekannten Fehlerdiagnoseverfahren wird aus Fehlersignalen auf einen wahren Fehler geschlossen, indem die gegenseitige Abhängigkeit der überwachten technischen Funktionen in einer Matrix wiedergegeben werden. Dabei bezeichnet eine "1" in einer Matrixzelle eine direkte technische Abhängigkeit zwischen den Funktionen in einer Richtung, eine "0" keine direkte technische Abhängigkeit. Somit lassen sich Folgefehler, d.h. außerhalb des Normbereichs liegende Signalwerte einiger Sensoren, erkennen, die nur deshalb außerhalb des Normbereiches liegen, weil an anderer Stelle ein Fehler vorliegt.
   Mittels dieser bekannten Matrixdarstellung kann man auch eine sogenannte "Zwickmühle", die auch als "deadlock" bezeichnet wird, erkennen. In einem solchen Fall beeinflussen sich mindestens zwei technische Funktionen derart gegenseitig, daß das Ergebnis der einen Funktion auf das Ergebnis der anderen Funktion wirkt. Bei einer solchen Zwickmühle - die bei zwei Funktionen eine gegenseitige Abhängigkeit bedingt, bei drei oder mehr Funktionen einen Kreisschluß bedeuten kann - kann man in der Regel nicht bestimmen, welcher Fehler die Signale S verursachte. In der Matrixdarstellung ist diese Situation allerdings erkennbar, und die Auflösung ist durch Zuhilfenahme weiterer Signale dann möglich, wenn diese Signale nur von einem Teilnehmer der Zwickmühle abhängen. Hat man aus der Matrixdarstellung Teilnehmer der Zwickmühle ermittelt, und liegt ein Signal, das nur von einem Teilnehmer der Zwickmühle abhängt, im Normbereich, scheidet dieser Teilnehmer als mögliche Fehlerquelle aus, wodurch die Schleife bzw. gegenseitige Abhängigkeit, die zur Zwickmühle führte, aufgebrochen ist. Es ist dann möglich, den ursächlichen Fehler zu ermitteln. Dies wird in der DE 197 23 079 C1 als Validierung bezeichnet.
2. Bei einem einfacheren Vorgehen werden aus den Signalen S Fehlerinformationen gewonnen, indem außerhalb ihrer Normbereiche liegende Signale als Binärwerte gewichtet werden. Die Wichtung wird abhängig von der Empfindlichkeit des Signals auf einen Fehlervorgenommen. So ist z.B. der Drehzahlgradient nur ein sehr schwach auf Fehler reagierendes Signal, die Spannungsüberwachung in einer Endstufe zeigt dagegen Fehler sehr empfindlich an. Überschreitet die Summe eine Schwellwertüberschreitung, erkennt die Diagnosefunktion DF einen Fehler.

Die in der Diagnosefunktion DF im Block 3 erkannten Fehler werden an einen Block 4 im Modul 2 weitergemeldet. In diesem Block 4 erfolgt die Notlaufanforderung. Es werden aus den von der Diagnosefunktion DF gemeldeten Fehlern entsprechende Betriebs- oder Steuerungseinschränkungsanforderungen gewonnen. Dabei kann es sich um verschiedenste Anforderungen handeln. Beispielsweise kann sich aus einem von der Diagnosefunktion DF gemeldeten Fehler die Betriebseinschränkungsanforderung ergeben, die Brennkraftmaschinen nur mit verringerter Kraftstoffmenge oder verringerter Last zu betreiben. Weitere Beispiele für Betriebs- oder Steuerungseinschränkungsanforderungen können sein: Anhebung des Leerlaufs, Veränderung der Abgasrückführrate auf einen Notlaufwert (z.B. Null), Abschaltung einzelner Einspritzventile, Abschaltung einer automatischen Geschwindigkeitsregelung, Beschränkung des Einspritzdruckes o.ä.

Im Beispiel der Fig. 2 führt die Diagnose D1 zu einer Betriebs- oder Steuerungseinschränkungsanforderung B1, die Diagnose D2 zu zwei Betriebs- oder Steuerungseinschränkungsanforderungen B2 und B3 und die Diagnosen D3 bzw. D4 zu einer Betriebs- oder Steuerungseinschränkungsanforderung B4 bzw. B5. Natürlich können auch mehrere Diagnosen der Diagnosefunktion DF zu einer Betriebs- oder Steuerungseinschränkungsanforderung bei der Notlaufanforderung NLA führen. Dies ist zur Vereinfachung in Fig. 2 jedoch nicht dargestellt.

Es muß sich bei den Betriebs- oder Steuerungseinschränkungsanforderungen nicht unbedingt um eine Eingrenzung der Funktionalität oder der Leistungsfähigkeit des Kraftfahrzeuges bzw. der Brennkraftmaschine handeln. Es sind auch lediglich systeminterne Anforderungen möglich, z.B. statt einer gemessenen Temperatur eine Modelltemperatur zu verwenden.

Diese Betriebs- oder Steuerungseinschränkungsanforderungen werden nun in einem Block 5 einer Querbeeinflussungsprüfung QBP unterzogen, um gegenseitige Beeinflussungen bzw. Gegenläufigkeiten einzelner Betriebs- oder Steuerungseinschränkungsanforderungen auszuschließen. So kann beispielsweise die Betriebs- oder Steuerungseinschränkungsanforderung einer Leerlaufdrehzahlerhöhung gegenläufig zu einem Betriebsmodus mit verringerter Kraftstoffmenge bei einer DieselBrennkraftmaschine wirken. Die Querbeeinflussungsprüfung QBP der einzelnen Betriebs- oder Steuerungseinschränkungsanforderungen kann im wesentlichen zwei Arten von Wirkungen haben: Eine Betriebs- oder Steuerungseinschränkungsanforderung kann vollständig unterdrückt werden. Dies ist im Beispiel der Fig. 2 bei der Betriebs- oder Steuerungseinschränkungsanforderung B2 die Folge, bei der alle Maßnahmen durch ein Verbot V durch eine Filterung unterdrückt werden. Zum anderen kann eine Betriebs- oder Steuerungseinschränkungsanforderung mit einer Auflage dahingehend versehen werden, daß sie nicht mit anderen Betriebs- oder Steuerungsanforderungen kombiniert werden darf. Dies ist im Beispiel der Fig. 2 mit der Betriebs- oder Steuerungseinschränkungsanforderung B3 der Fall, die mit einer Auflage A1 versehen wird.Im Beispiel der Fig. 2 darf sie nicht mit der Betriebs- oder Steuerungseinschränkungsanforderung B1 bzw. B5 kombiniert werden.

Die Querbeeinflussungsprüfung QBP kann beispielsweise durch Adreßbits erfolgen, wie nachfolgend anhand der Fig. 3 beschrieben wird. Fig. 3 zeigt in einem Block 8 drei Betriebs- und Steuerungseinschränkungsanforderungen B1 bis B3, die in der Notlaufanforderung NLA vorliegen. Dabei sind in der Matrix des Blockes 8 in jeder Zeile 9 eine mögliche Kombination der Betriebs- oder Steuerungseinschränkungsanforderungen B1 bis B3 aufgetragen. Die Fig. 3 ist zeilenweise zu lesen.In jeder Zeile 9 des Blockes 8 ist eine mögliche Anforderungskombination von B1 bis B3 aufgetragen, in der entsprechenden Zeile des Blockes 10 zugeordnete Werte von Adreßbits a und b und in der zugehörigen Zeile des Blockes 11 entsprechend weitergeleitete Betriebs- oder Steuerungseinschränkungsanforderungen B1' bis B3'. In der ersten Zeile ist für jede Betriebs- und Steuerungseinschränkungsanforderung eine Null eingetragen, d.h. in diesem Fall ist keine dieser drei angefordert. In der zweiten Zeile ist lediglich bei B3 eine Eins vermerkt. Folglich ist nur B3 angefordert. Erst in der vierten Zeile, d.h. in der vierten möglichen Kombination werden zugleich zwei Betriebs- oder Steuerungseinschränkungsanforderungen angefordert, nämlich B2 und B3. In der letzten Zeile ist schließlich die Kombination aufgeführt, in der alle drei Betriebs- oder Steuerungseinschränkungsanforderungen B1 bis B3 angefordert werden. Eine der Kombinationen in Block 8 liegt im Betrieb immer vor. Die vorliegende Kombination, die einer Zeile 9 des Blockes 8 entspricht, wird mit Adreßbits a und b, deren mögliche Werte im Block 10 dargestellt sind, bearbeitet. Die Adreßbits a und b können gemeinsam vier verschiedene Zustände beschreiben. Diese Zustände drücken aus, welche Betriebs- oder Steuerungseinschränkungsanforderungen B1 bis B3 bei Vorliegen mehrerer Betriebs- oder Steuerungseinschränkungsanforderungen Vorrang haben. So ist beispielsweise bei der vierten Kombination, bei der sowohl B1 als auch B3 angefordert wird, die Adreßbitkombination a = 1 und b = 0 vorgegeben, was dazu führt, daß nach der Querbeeinflussungsprüfung QBP nur die Betriebs- oder Steuerungseinschränkungsanforderung B2' zugelassen wird, obwohl B2 und B3 angefordert wurden.

Alle möglichen Ausgänge singulär auftretender Betriebs- oder Steuerungseinschränkungsanforderungen B1' bis B3' sind in Block 11 dargestellt.

Natürlich ist die Zahl der Adreßbits a und b von der Anzahl an gleichzeitig möglichen Betriebs- oder Steuerungseinschränkungsanforderungen abhängig. Im vorliegenden Beispiel der Fig. 3 genügen zwei Adreßbits, da sie für vier Zustände ausreichend sind. Wären beispielsweise sieben gleichzeitige Betriebs- oder Steuerungseinschränkungsanforderungen möglich, benötigte man drei Adreßbits.

Dieses Verfahren mittels Adreßbits ist eine mögliche Variante eines Multiplexers, der bei gleichzeitiger Anforderung mehrerer Betriebs- oder Steuerungseinschränkungsanforderungen nur eine davon weiterleitet.

Weiter werden die einzelnen Betriebs- oder Steuerungseinschränkungsanforderungen in der Querbeeinflussungsprüfung QBP bewertet. Die Bewertung drückt aus, wie stark eine einzelne Betriebs- oder Steuerungsanforderung in den Betrieb bzw. die Leistungsfähigkeit der Brennkraftmaschine bzw. des Kraftfahrzeuges eingreift.

Die Querbeeinflussungsprüfung QBP leitet die Betriebs- oder Steuerungseinschränkungsanforderungen somit gefiltert und bewertet weiter. Vorzugsweise erfolgt die Bewertung der Betriebs- oder Steuerungseinschränkungsanforderungen betriebsparameterabhängig, da je nach Betriebszustand der Brennkraftmaschine einzelne Betriebs- oder Steuerungseinschränkungsanforderungen sich unterschiedlich stark auf die Leistung der Brennkraftmaschine bzw. des Kraftfahrzeuges auswirken.

Bei der Querbeeinflussungsprüfung QBP mittels Multiplexer (Fig. 3) muß zur Bewertung noch geeignete Information, beispielsweise in Form weiterer Adreßbits hinzugenommen werden, um eine Bewertung der einzelnen Maßnahme, bzw. die Maßnahmen der nächsten Priorität zu ermitteln. Auch kann man z.B. zwei Multiplexer parallel vorsehen. Der erste ermittelt Betriebs- oder Steuerungseinschränkungsanforderungen einer ersten Prioritätsstufe, der zweite Multiplexer ermittelt die Betriebs- oder Steuerungseinschränkungsanforderungen einer zweiten Prioritätsstufe.

Optional ist es auch möglich, die Gesamtheit der Betriebs- oder Steuerungseinschränkungsanforderungen für die Querbeeinflussungsprüfung QBP als Matrix zusammenzufassen und die Querbeeinflussung ebenfalls als Matrix auszudrücken, so daß der Ausgang der Querbeeinflussungsprüfung QBP durch eine einfache Matrizenmultiplikation erhalten werden kann.

In den Zellen der Matrix der Querbeeinflussung stehen geeignete Nullen und Einsen, die die gegenseitige Querbeeinflussung von Betriebs- oder Steuerungseinschränkungsanforderungen wiedergeben, vorzugsweise sind jedoch auch Zahlenwerte größer als Eins vorgesehen, so daß die Matrizenmultiplikation gleichzeitig die Bewertung der Betriebs- oder Steuerungseinschränkungsanforderungen vornimmt.

Die derart weitergeleiteten Betriebs- oder Steuerungseinschränkungsanforderungen werden einem Block 6 zugeführt, der eine Ablaufplanung AP vornimmt. Die Ablaufplanung AP nimmt die bewerteten und weitergeleiteten Betriebs- und Steuerungseinschränkungsanforderungen auf und bringt sie in eine zeitliche Reihenfolge derart, daß die am wenigsten in die Leistungsfähigkeit der Brennkraftmaschine bzw. des Kraftfahrzeuges eingreifenden Betriebs- und Steuerungseinschränkungsanforderungen bzw. solche Kombinationen aus Betriebs- und Steuerungseinschränkungsanforderungen zuerst verwirklicht werden. Dazu wird die Bewertung in eine Priorität umgesetzt. Im Beispiel der Fig. 2 hat die Betriebs- oder Steuerungseinschränkungsanforderung B5 die höchste Prioritätsklasse P1, weshalb die daraus resultierende Betriebs- oder Steuerungsmaßnahme M1 als erste in Block 7 ausgeführt wird.

Eine Betriebs- oder Steuerungsmaßnahme besteht somit aus der Umsetzung einer oder mehrerer Betriebs- oder Steuerungseinschränkungsanforderungen.

Die Ablaufplanung AP prüft dann nach dem Einleiten einer Betriebs- oder Steuerungsmaßnahme, ob diese den gewünschten Erfolg hatte. Ist dies nicht der Fall, d.h. ergeben sich in der Diagnosefunktion DF weiterhin Fehler mit resultierenden Betriebs- oder Steuerungseinschränkungsanforderungen, wird das mit der nächstniederen Priorität ausgestattete Bündel aus Betriebs- oder Steuerungseinschränkungsanforderungen umgesetzt, im Beispiel der Fig. 2 die Betriebs- oder Steuerungseinschränkungsanforderung B1, die in Prioritätsgruppe P2 eingruppiert ist. Sie führt zu Betriebs- oder Steuerungsmaßnahme M2. Aufgrund der Bewertung, die zur Prioritätsklasse P2 führte, ist diese Betriebs- oder Steuerungsmaßnahme "härter", d.h. sie schränkt die Leistungsfähigkeit der Brennkraftmaschine bzw. des Kraftfahrzeuges stärker ein als die Betriebs- oder Steuerungsmaßnahme M1.

In dieser Reihenfolge werden gemäß den Prioritäten die einzelnen Betriebs- oder Steuerungseinschränkungsanforderungen bzw. Bündel daraus abgearbeitet. Dabei werden eventuelle Auflagen berücksichtigt, d.h. Kombinationen von Betriebs- oder Steuerungseinschränkungsanforderungen nicht durchgeführt, die durch Auflagen, z. B. die Auflage A1, verboten sind. Die Ablaufplanung AP bringt dabei die Betriebs- oder Steuerungseinschränkungsanforderungen in der Reihenfolge ihrer Prioritäten zur Verwirklichung und prüft dabei solange alle möglichen, d.h. nicht durch Auflagen untersagte, Betriebs- oder Steuerungseinschränkungsanforderungen durch, bis mit einer Betriebs- oder Steuerungsmaßnahme der erwünschte Erfolg, d.h. das Ausbleiben einer Diagnose, erreicht wird. Ist dies geschehen, werden die noch verbleibenden, d.h. noch abzuarbeitenden Betriebs- oder Steuerungseinschränkungsanforderungen bzw. Kombinationen daraus, verworfen, da diejenige Betriebs- oder Steuerungsmaßnahme gefunden wurde, die am wenigsten in die Leistungsfähigkeit der Brennkraftmaschine bzw. des Kraftfahrzeuges eingreift.

Natürlich kann man in der Querbeeinflussungsprüfung solche Betriebs- oder Steuerungseinschränkungsanforderungen direkt an den Ausgang weiterleiten, von denen bekannt ist, daß sie keinen Querbeeinflussungen unterliegen.

## Patentansprüche

1. Verfahren zum gesteuerten Betrieb einer Vorrichtung, insbesondere einer Brennkraftmaschine, bei welchem Verfahren
a) Sensorsignale erfasst werden,
b) aus diesen Sensorsignalen in einer Diagnosefunktion Fehler beim Betrieb der Vorrichtung diagnostiziert werden,
c) daraus entsprechende Betriebs- oder Steuerungseinschränkungsanforderungen für die Vorrichtung abgeleitet werden,
d) diese Betriebs- oder Steuerungseinschränkungsanforderungen auf Querbeeinflussungen geprüft werden, wobei bei Vorliegen mehrerer Betriebs- oder Steuerungseinschränkungsanforderungen solche Betriebs- oder Steuerungseinschränkungsanforderungen, die sich gegenseitig beeinflussen, derart gefiltert werden,
dass die Betriebs- oder Steuerungseinschränkungsanforderungen in einer Matrix ausgedrückt werden, die Querbeeinflussungen möglicher Betriebs- oder Steuerungseinschränkungsanforderungen ebenfalls in einer Matrix der Querbeeinflussung ausgedrückt werden und eine Prüfung durch Matrizenmultiplikation erfolgt, oder
dass die Betriebs- oder Steuerungseinschränkungsanforderungen zur Querbeeinflussungsprüfung durch einen Multiplexer geleitet werden, der bei gleichzeitiger Anforderung mehrerer Betriebs- oder Steuerungseinschränkungsanforderungen nur eine Betriebs- oder Steuerungseinschränkungsanforderung auswählt und weiterleitet, und
e) die derart weitergeleiteten Betriebs- oder Steuerungseinschränkungsanforderungen in einer Ablaufplanung in eine zeitliche Reihenfolge gebracht werden, so dass entsprechende Betriebs- oder Steuerungsmaßnahmen in der Umsetzung einer oder mehrerer Betriebs- oder Steuerungseinschränkungsanforderungen in einer bestimmten Reihenfolge ergriffen werden, während nach dem Einleiten einer Betriebs- oder Steuerungsmaßnahme überprüft wird, ob die Vorrichtung einen gewünschten Betriebszustand zeigt, und die in der Reihenfolge als nächste vorgesehene Betriebs- oder Steuerungsmaßnahme nur dann eingeleitet wird, wenn die Vorrichtung den gewünschten Betriebszustand nicht zeigt.

2. Verfahren nach Anspruch 1, **dadurch gekennzeichnet, dass** in der Ablaufplanung in Schritt e) diejenigen Betriebs- und Steuerungsmaßnahmen zuerst eingeleitet werden, die die geringste Einschränkung beim Betrieb der Vorrichtung mit sich bringen.

3. Verfahren nach einem der vorhergehenden Ansprüche, **dadurch gekennzeichnet, dass** die Betriebs- oder Steuerungsanforderungen direkt vor oder direkt nach dem Weiterleiten in Schritt d) mit insbesondere betriebsparameterabhängigen Bewertungen versehen werden, die in Schritt e) berücksichtigt werden, wobei für Kombinationen von Betriebs- oder Steuerungsanforderungen die Bewertung der Kombination durch funktionale Verknüpfung der Bewertung der einzelnen Betriebs- oder Steuerungseinschränkungsanforderungen erfolgt und wobei die Bewertung ein Maß für die Einschränkung des Betriebs der Vorrichtung ist.

4. Verfahren nach Anspruch 3, **dadurch gekennzeichnet, dass** die Matrix der Querbeeinflussung zugleich die Bewertung der Betriebs- oder Steuerungseinschränkungsanforderungen bewirkt, indem in den entsprechenden Zellen der Matrix der Querbeeinflussung geeignete Zahlenwerte vorgesehen sind.

5. Verfahren nach Anspruch 3, **dadurch gekennzeichnet, dass** mehrere Multiplexer verwendet werden, denen die Betriebs- oder Steuerungseinschränkungsanforderungen parallel zugeleitet werden, wobei jeder Multiplexer die Betriebs- oder Steuerungseinschränkungsanforderungen nach einer anderen Bewertung auswählt und weiterleitet.

## Claims

1. Method for controlled operation of a device, in particular an internal-combustion engine, in which method
a) sensor signals are detected,
b) faults during operation of the device are diagnosed from these sensor signals,
c) corresponding operational or control limitation requirements for the device are derived therefrom,
d) these operational or control limitation requirements are checked for cross-influences, wherein in the presence of a plurality of operational or control limitation requirements such operational or control limitation requirements which influence each other are filtered out in such a way
that the operational or control limitation requirements are expressed in a matrix, the cross-influences of possible operational or control limitation requirements are also expressed in a cross-influence matrix and a check is carried out via matrix multiplication or
that the operational or control limitation requirements are passed through a multiplexer for the cross-influence check, the multiplexer, with simultaneous requirement for a plurality of operational or control limitation requirements, selecting only one operational or control limitation requirement and forwarding it, and
e) the operational or control limitation requirements forwarded in this way are put into a time sequence in a process plan, so corresponding operational or control measures are taken in a specific sequence in the implementation of one or more operating or control limitation requirements, while after initiation of an operational or a control measure a check is made as to whether the device is exhibiting a desired operating state, and the operational or control measure provided as the next in the sequence is only initiated if the device does not exhibit the desired operating state.

2. Method according to claim 1, **characterised in that** in step e) of the process plan those operational and control requirements which entail the least limitation during operation of the device are initiated first of all.

3. Method according to one of the preceding claims, **characterised in that**, directly before or directly after forwarding in step d), the operational or control requirements are provided with, in particular, operating parameter-dependent evaluations which are taken into account in step e), wherein for combinations of operational or control requirements the combination is evaluated by functional linking of the evaluation of the individual operational or control limitation requirements and wherein the evaluation is a measure of the limitation of the operation of the device.

4. Method according to claim 3, **characterised in that** the matrix of the cross-influence at the same time causes the evaluation of the operational or control limitation requirements **in that** suitable numerical values are provided in the corresponding cells of the cross-influence matrix.

5. Method according to claim 3, **characterised in that** a plurality of multiplexers are used to which the operational or control limitation requirements are conveyed in parallel, wherein each multiplexer selects and forwards the operational or control limitation requirements according to a different evaluation.

## Revendications

1. Procédé de fonctionnement contrôlé d'un dispositif, en particulier d'un moteur à combustion interne, dans lequel
a) des signaux de capteurs sont saisis,
b) des défauts sont diagnostiqués lors du fonctionnement du dispositif par une fonction de diagnostic à partir de ces signaux de capteurs,
c) des demandes correspondantes de restriction de fonctionnement ou de commande relatives au dispositif sont dérivées de ces défauts,
d) ces demandes de restriction de fonctionnement ou de commande sont examinées relativement aux influences croisées, ces demandes de restriction de fonctionnement ou de commande qui s'influencent mutuellement sont filtrées, lors de la présence de plusieurs demandes de restriction de fonctionnement ou de commande, de telle sorte que
les demandes de restriction de fonctionnement ou de commande sont exprimées dans une matrice, les influences croisées des demandes de restriction de fonctionnement ou de commande possibles sont également exprimées dans une matrice d'influences croisées, et un contrôle est effectué par une multiplication de matrices, ou
les demandes de restriction de fonctionnement ou de commande sont passées, afin de les examiner relativement aux influences croisées, par un multiplexeur qui, lors de la sollicitation simultanée de plusieurs demandes de restriction de fonctionnement ou de commande, ne choisit et ne transmet qu'une seule demande de restriction de fonctionnement ou de commande,
et
e) les demandes de restriction de fonctionnement ou de commande ainsi transmises sont ordonnées selon une séquence temporelle dans un planning de déroulement, de sorte que des mesures correspondantes de fonctionnement ou de commande sont prises dans une certaine séquence lors de l'initiation d'une ou de plusieurs demandes de restriction de fonctionnement ou de commande, tandis qu'il est contrôlé après l'initiation d'une mesure de fonctionnement ou de commande si le dispositif présente un état de fonctionnement désiré, la mesure de fonctionnement ou de commande prévue comme la prochaine dans la séquence n'étant réalisée que si le dispositif ne présente pas l'état de fonctionnement désiré.

2. Procédé selon la revendication 1, **caractérisé en ce que** le planning de déroulement initie dans l'étape e) d'abord les mesures de fonctionnement ou de commande qui entraînent la plus petite limitation du fonctionnement du dispositif.

3. Procédé selon l'une des revendications précédentes, **caractérisé en ce que** les demandes de fonctionnement ou de commande sont dotées, immédiatement avant ou après leur transmission dans l'étape d), d'évaluations, spécialement celles qui dépendent de paramètres de fonctionnement, et qui seront prises en considération dans l'étape e), l'évaluation de combinaisons de demandes de fonctionnement ou de commande étant effectuée par un chaînage fonctionnel de l'évaluation des différentes demandes de restriction de fonctionnement ou de commande, l'évaluation étant une mesure de la restriction du fonctionnement du dispositif.

4. Procédé selon la revendication 3, **caractérisé en ce que** la matrice de l'influence croisée occasionne simultanément l'évaluation des demandes de restriction de fonctionnement ou de commande en prévoyant des valeurs numériques appropriées dans les lignes correspondantes de la matrice.

5. Procédé selon la revendication 3, **caractérisé en ce que** plusieurs multiplexeurs sont utilisés auxquels les demandes de restriction de fonctionnement ou de commande sont amenées, chaque multiplexeur sélectionnant et transmettant les demandes de restriction de fonctionnement ou de commande selon une autre évaluation.
